# EUROPEAN PATENT APPLICATION

(11) **EP 2 479 715 A1**
(43) Date of publication of application: **25.07.2012**
(21) Application number: 12151748.6
(22) Date of filing: 19.01.2012
(51) Int. Cl.: G06M 1/10, A01K 61/00, G06M 7/00

(54) **System for counting and/or recognizing fish**

(30) Priority: 24.01.2011 NL 2006056
(71) Applicant: Witteveen + Bos Raadgevende ingenieurs B.V., 7411 SC Deventer (NL)
(72) Inventor: Clemens, Francois Henri Leon Raymond, 3513 EW Utrecht (NL); Wijtvliet, Mark, 3903 EN Veenendaal (NL)
(74) Representative: Vernout, Robert

(57) **Abstract**

A system for counting and/or recognizing fish, comprising a frame through which fish can swim, wherein said frame is provided with a multitude of electrodes, extending on at least two opposing sides of said frame, wherein said electrodes are each individually electrically connected to at least one ohm or volt meter, wherein said system comprises a processor connected to said ohm or volt meter, and electronic storage means connected to said processor, wherein said ohm or volt meter is arranged to measure the resistance or potential difference between a multitude of pairs of electrodes in a short period of time, wherein said processor is arranged to determine a resistance or potential difference value for each of said pair of electrodes and store said values in said memory, and wherein said processor is further arranged to determine the presence of a fish from the determined values from said multitude of measurements.

## Description

The invention relates to a system for counting and/or recognizing fish.

A need exists to reliably count fish that pass through a fish passage. These passages are for instance used at water management facilities, which use pumps to manage the water level in a certain area. The passages allow fish to bypass the pumps. By using guiding techniques the fish are guided away from the pump inlets and to the inlet of the passage. In order to evaluate the effectiveness of the passage and these guiding techniques the fish have to be counted. There also exists a need for recognizing and counting fish species, since this can give insight in the migration patterns of the fish. The goal of the invention is to provide a simple and reliable system for counting fish, which is able to detect that an object (a fish or possibly something else) is moving through the fish passage, which is able to make a distinction if an object that moves through the passage is a fish or something else, which is able to count the number of fish passing through the passage at a certain time, which is able to determine the direction that the fish travel through the passage, and/or which is able to determine the size and/or other properties of the fish.

To that end, the system for counting fish according to the invention comprises a frame through which fish can swim, wherein said frame is provided with a multitude of electrodes, extending on at least two opposing sides of said frame, wherein said electrodes are each individually electrically connected to at least one ohm or volt meter, wherein said system comprises a processor connected to said ohm or volt meter, and electronic storage means connected to said processor, wherein said ohm or volt meter is arranged to measure the resistance or potential difference between a multitude of pairs of electrodes in a short period of time, wherein said processor is arranged to determine a resistance or potential difference value for each of said pair of electrodes and store said values in said memory, and wherein said processor is further arranged to determine the presence of a fish from the determined values from said multitude of measurements.

Fish appear to have a much lower electrical resistance than water, and therefore they influence the resistance between a pair of electrodes if they are swimming in the vicinity or on the straight line between said electrodes. In this manner within said short period of time a resistivity map is built, represented by the measured resistance data between a multitude of pairs of electrodes, from the space within said frame. Much like when taking a photograph, in order to get a sharp map, said short period of time is preferably as short as possible, for instance less than 1 second, preferably less than 0,25 seconds, more preferably less than 0,1 seconds.

Preferably said ohm or volt meter is arranged to measure the resistance between one first electrode and a multitude of second electrodes at once and to repeat this measurement for each of said electrodes as the first electrode within said short period of time.

Said processor is preferably arranged to use an image recognition algorithm on said stored values for said determination of the presence of a fish.

Said determined resistance or potential difference value is preferably the deviation from a predetermined resistance or potential difference value, wherein said predetermined resistance or potential difference value is preferably determined and stored by said processor while the frame is present in water while no fish are present near the frame, preferably on the location where the system is to be used.

Said processor is further preferably arranged to determine the approximate size of a fish, an indication of the kind of fish, the number of fish present, and/or to count the number of determined fish passing through the frame during a predetermined time period.

In the preferred embodiment said system comprises at least two substantially identical ones of said groups of electrodes arranged such that fish are guided to subsequently swim through said groups, and said processor is further arranged to determine the direction of movement of the determined fish through said groups. In that case said processor is preferably further arranged to count the number of determined fish passing through the frame during a predetermined time period for both directions apart.

Said frame preferably has a closed circumference, and said electrodes are arranged on said frames at regular intervals along said circumference, such that a complete map of the space within said frame can be built. In a practical embodiment, said frame has a substantially rectangular shape.

In order to prevent that the resistance or potential difference between two electrodes is influenced by the presence of the other electrodes on the frame, said electrodes are preferably made of a material having a resistivity of more than 200 nΩm, such as graphite. Thereby the current between two electrodes does not tend to flow through the electrodes along the frame, but through the water, such that the resistance or potential difference between two electrodes is not primarily determined by a lower resistance along the frame.

The invention will be exemplified by means of a preferred embodiment, as shown in the figures, wherein:

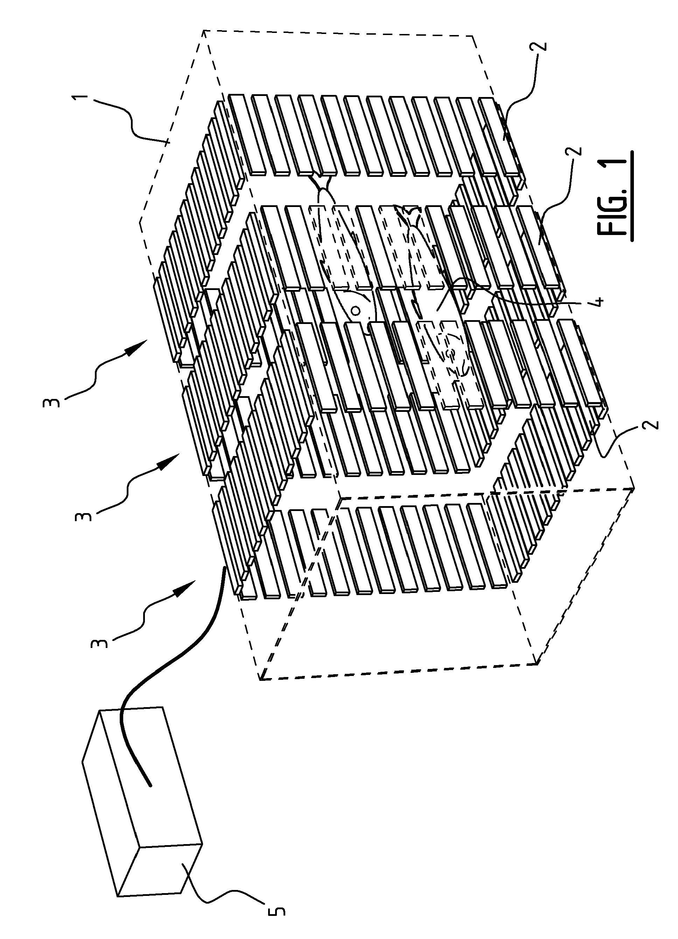

Figure 1 is a schematic perspective view of a system in accordance with the invention; and

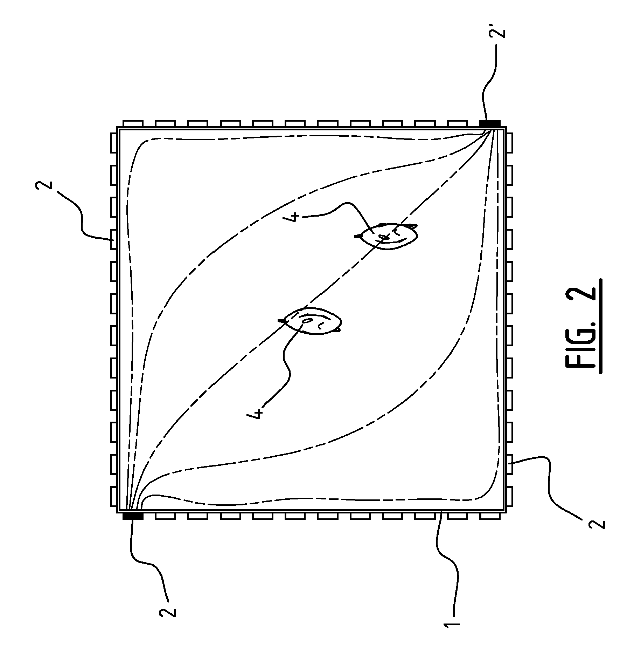

Figure 2 is a schematic view of a cross section of the system of figure 1.

According to the figures, a system for counting and/or recognizing fish comprises a frame 1, on which a multitude of electrodes 2 is present. Each side of the square frame 1 comprises a multitude of spaced apart electrodes 2. In this embodiment there are twelve electrodes 2 on each of the four sides of the frame. The system comprises three groups 3 of electrodes 2 in a row, in order to be able to determine the direction in which fishes 4 swim. Measurement of the resistance between the corresponding pairs of electrodes in each group takes place simultaneously, such that the resistivity maps of the groups 3 of electrodes 2 are built simultaneously and congruently within the same time frame.

The electrodes 2 are connected to an electronic unit 5, comprising a, in this case 64:1, bidirectional analog switch, an ohm/voltage meter and necessary interacting computer components such as a processor unit, data storage and a power switching unit. The processor controls the switch such that the ohm meter sequentially puts a voltage of for instance 10 V on each individual electrode of each group of electrodes 2, and measures the resistances between said individual electrode 2 as first electrode 2' and all the electrodes 2 located on one of the three other sides of the frame as second electrodes. Also the potentials on all other electrodes are measured in order to aid the calculation speed and accuracy. The measured values are stored in memory for each measured pair of electrodes 2, 2'. The measurement can be repeated for half the number of the electrodes 2 as the first electrode 2', for instance all the electrodes 2 on two sides of the frame 1, such that data about the resistance between each pair of electrodes 2, 2' is obtained, but the measurement may also be repeated for all electrodes 2 as the first electrode 2'in order to improve reliability. Each series of measurements can take place in a very short period of time, for instance within 0.1 s.

By using known equation solving techniques, the measured and stored resistance data are processed by the processor in order to form a two-dimensional cross-sectional resistivity map of the space within the frame 1 for each group 3. In order to improve the accuracy of the resistivity map, a calibration measurement is carried out when there is no fish 4 within the frame, and the stored resistance values of said calibration measurement are subtracted from the subsequently measured corresponding resistance values. The measured potentials are also used. Furthermore the measured values are normalized for the length of the path between the electrodes 2, 2'.

The resistivity map forms a two-dimensional grid, wherein for each co-ordinate in said grid a resistivity value is stored, i.e there may be co-ordinates with a high resistivity value, and co-ordinates with a low resistivity value. Since fish has a substantially lower resistivity than water, co-ordinates with a low resistivity value are considered to be a co-ordinate where a (part of a) fish is present. Other materials may have other resistivity values, therefore only resistivity values within a certain range are considered as relating to fish.

The resistivity maps are then analyzed by the processor using known image recognition technology, in order to determine the presence of one or more fishes 4, as well as the size of the cross section of the fishes 4.

The more electrodes 2 are used, the higher the resolution of the resistivity map may be, and the more detailed the information about the size and shape of the fishes 4 can be. Based on this analysis, the determined fishes 4 are labelled as a certain class of fish. By comparing the results of the analyses of subsequent resistivity maps of the three groups of electrodes, the processor can determine if a fish 4 has moved from one group 3 to another group 3, and thereby determine the direction of travel. The processor is further programmed to repeatedly count the number of fishes 4 of each class in each direction during a period of time, for instance a day, and to store the results of said counts in memory.

## Claims

1. A system for counting and/or recognize fish, comprising a frame through which fish can swim, wherein said frame is provided with a multitude of electrodes, extending on at least two opposing sides of said frame, wherein said electrodes are each individually electrically connected to at least one ohm or volt meter, wherein said system comprises a processor connected to said ohm or volt meter, and electronic storage means connected to said processor, wherein said ohm or volt meter is arranged to measure the resistance or potential difference between a multitude of pairs of electrodes in a short period of time, wherein said processor is arranged to determine a resistance or potential difference value for each of said pair of electrodes and store said values in said memory, and wherein said processor is further arranged to determine the presence of a fish from the determined values from said multitude of measurements.

2. The system of claim 1, wherein said ohm or volt meter is arranged to measure the resistance or potential difference between one first electrode and a multitude of the remaining second electrodes at once and to repeat this measurement for a multitude of said electrodes as the first electrode within said short period of time.

3. The system of claim 1 or 2, wherein said processor is arranged to use an image recognition algorithm on said stored values for said determination of the presence of a fish.

4. The system of claim 1, 2 or 3, wherein said determined resistance or potential difference value is the deviation from a predetermined resistance or potential difference value, wherein said predetermined resistance or potential difference value is preferably determined and stored by said processor while the frame is present in water while no fish are present, preferably on the location where the system is to be used.

5. The system of any of the previous claims, wherein said processor is further arranged to determine the approximate size of a fish from the values from said multitude of measurements.

6. The system of any of the previous claims, wherein said processor is further arranged to determine an indication of the kind of fish from the values from said multitude of measurements.

7. The system of any of the previous claims, wherein said processor is further arranged to determine the number of fish present from the values from said multitude of measurements.

8. The system of any of the previous claims, wherein said processor is further arranged to count the number of determined fish passing through the frame during a predetermined time period.

9. The system of any of the previous claims, wherein said system comprises at least two substantially identical groups of said multitude of electrodes arranged such that fish is guided to subsequently swim through said groups, and said processor is further arranged to determine the direction of movement of the determined fish through said groups.

10. The system of claim 9, wherein said processor is further arranged to count the number of determined fish passing through the frame during a predetermined time period for both directions apart.

11. The system of any of the previous claims, wherein said frame has a closed circumference, and said electrodes are arranged on said frames at regular intervals along said circumference.

12. The system of any of the previous claims, wherein said electrodes are made of a material having a resistivity of more than 200 nΩm, such as graphite.

13. The system of any of the previous claims, wherein said frame has a substantially rectangular shape.
